# EUROPÄISCHE PATENTSCHRIFT

(11) **EP 1 921 340 B1**
(45) Veröffentlichungstag und Bekanntmachung des Hinweises auf die Patenterteilung: **15.12.2010**
(21) Anmeldenummer: 07019988.0
(22) Anmeldetag: 12.10.2007
(51) Int. Cl.: F16F 7/10, F16F 15/02

(54) **Aktiver Tilger**
Active tuned mass damper
Amortisseur à masse syntonisée actif

(30) Priorität: 11.11.2006 DE 102006053232
(43) Veröffentlichungstag der Anmeldung: 14.05.2008
(73) Patentinhaber: Wölfel Beratende Ingenieure GmbH & Co. KG, 97204 Höchberg (DE)
(72) Erfinder: Engelhardt Jürgen, 97204 Höchberg (DE); Pankoke Steffen, 97837 Erlenbach (DE); Wölfel Horst Peter, 97204 Höchberg (DE)
(74) Vertreter: Knoblauch, Andreas

(56) Entgegenhaltungen:
- US-A- 5 551 650
- US-A- 5 730 429

## Beschreibung

Die Erfindung betrifft einen aktiven Tilger, der mindestens zwei in unterschiedliche Bewegungsrichtungen wirkende Aktoren und eine Befestigungsvorrichtung aufweist, wobei die Aktoren einen ersten und einen zweiten Befestigungsabschnitt aufweisen, wobei die Aktoren am ersten Befestigungsabschnitt über bewegliche Verbindungen mit der Befestigungsvorrichtung verbunden sind und am zweiten Befestigungsabschnitt über ein steifes Verbindungselement miteinander gekoppelt sind.

Aus US 5 730 429 A ist ein solcher aktiver Schwingungsdämpfer bekannt, der zwei Bauteile, die durch den Schwingungsdämpfer verbunden sind, aktiv voneinander entkoppeln soll. Dieser Schwingungsdämpfer weist vier in unterschiedliche Bewegungsrichtungen wirkende Aktoren auf, die über Elastomerelemente mit einer ersten Befestigungsvorrichtung verbunden sind. Über bewegliche Verbindungen, die als flexible Balgelemente ausgebildet sind, sind die Aktoren mit einer zweiten Befestigungsvorrichtung verbunden. Die beweglichen Verbindungen bilden Kammern für ein Fluid, das über eine Passage aus einer größeren Vorratskammer zugeführt werden kann.

Aktive Tilger werden zur Schwingungsminderung von schwingungsfähigen Bauteilen eingesetzt. Sie bestehen in der Regel aus einem Masse-Feder-Dämpfungssystem, wobei durch einen Aktor auf die Masse zusätzliche Stellkräfte eingebracht werden können. Gegenüber passiven Tilgern kann die nötige Tilgermasse deutlich verringert werden. Dabei entspricht die Tilgermasse eines aktiven Tilgers in der praktischen Anwendung in etwa einem Zehntel der Tilgermasse eines passiven Tilgers bei vergleichbarer Wirkung.

Aktive Tilger können über einen größeren Frequenzbereich eine Schwingungsminderung erreichen als passive Tilger. Die Eigenfrequenz eines Tilgers wird üblicherweise auf die Frequenz der zu dämpfenden Schwingung bzw. auf die Resonanzfrequenz des zu dämpfenden Systems abgestimmt. Bei einem aktiven Tilger kann die Schwingung des Systems über einen Sensor erfaßt und durch einen Regelkreis eine entsprechende Stellgröße für den Aktor erzeugt werden, so daß die Schwingung des Systems gemindert wird.

Treten Schwingungen in verschiedenen Bewegungsrichtungen auf, so sind in der Regel zwei eigenständige Tilger erforderlich. Bekannt ist auch, eine Reihenschaltung von zwei Aktoren zu verwenden, die in unterschiedliche Bewegungsrichtungen auf eine gemeinsame Tilgermasse wirken. Dabei bewegt der erste Aktor den zweiten Aktor und die Tilgermasse, während der zweite Aktor nur noch die Tilgermasse beaufschlagt. Bei einem derartigen System ist eine aufwendige Führung für die Tilgermasse notwendig.

Der Erfindung liegt die Aufgabe zugrunde, den Aufbau eines aktiven Tilgers kompakt und einfach zu gestalten.

Erfindungsgemäß wird diese Aufgabe bei einem aktiven Tilger der eingangs genannten Art dadurch gelöst, daß die beweglichen Verbindungen jeweils in der Bewegungsrichtung des Aktors steif ausgebildet sind, mit dem sie verbunden sind, und in die anderen Bewegungszichtungen Rückstellkräfte erzeugen.

Der aktive Tilger ist dadurch sehr steif ausgebildet, so daß die Eigenfrequenz außer durch seine Masse praktisch nur durch die beweglichen Verbindungen bestimmt wird. Dabei ist die Lage der Aktoren zueinander immer genau definiert. Wenn die Aktoren gleich aufgebaut sind, wirken sie auch auf eine betragsmäßig gleiche Tilgermasse. Dadurch vereinfacht sich die Ansteuerung der Aktoren. Diese wird durch die Aktormasse und die Masse des Verbindungselements definiert. Durch diese Ausgestaltung kann eine Schwingungsminderung in unterschiedliche Bewegungsrichtungen erfolgen, wobei eine gemeinsame Tilgermasse verwendet wird, ohne daß aufwendige Führungen zwischen den Aktoren notwendig sind. Dadurch ergibt sich ein besonders einfacher und kompakter Gesamtaufbau. Da die beweglichen Verbindungen jeweils in der Bewegungsrichtung des Aktors steif ausgebildet sind, mit dem sie verbunden sind, wird der Kraftfluß über einen möglichst kurzen Weg übertragen. Dabei werden unnötige Koppelstellen, die zu Verlusten führen können, vermieden.

Vorzugsweise weist jeder Aktor statische und bewegte Elemente auf, wobei der erste Befestigungsabschnitt an den statischen Elementen und der zweite Befestigungsabschnitt an den bewegten Elementen angeordnet ist. Statisch bedeutet dabei ortsfest bezüglich der beweglichen Verbindungen. Durch diese Ausgestaltung trägt auch der gerade eine Stellbewegung ausführende Aktor zur Tilgermasse bei, die dann durch die bewegte Masse des die Stellbewegung ausführenden Aktors, die Gesamtmasse des nicht angesteuerten Aktors und das Verbindungselement gebildet wird. Die Masse des aktiven Tilgers, die nicht zur Schwingungsminderung beiträgt, wird so minimiert. Bevorzugterweise sind die beweglichen Verbindungen als stoffschlüssige Gelenke ausgebildet, die in mindestens eine Bewegungsrichtung steif ausgebildet sind und erfindungsgemäß in die anderen Bewegungsrichtungen Rückstellkräfte erzeugen. Stoffschlüssige Gelenke stellen wartungs- und spielfreie gelenkige Verbindungen dar, die kaum Reibung und dabei nur eine geringe Eigendämpfung aufweisen. Während bei passiven Tilgern das Vorhandensein einer Dämpfung unbedingt erforderlich ist, wird durch die Eigendämpfung bei aktiven Tilgern die Regelung erschwert. Daher ist eine Reduzierung der Eigendämpfung besonders günstig. Da die stoffschlüssigen Gelenke Rückstellkräfte erzeugen, kann auf zusätzliche rückstellende Elemente, wie z.B. Druckfedern, verzichtet werden. Durch die beweglichen Verbindungen erfolgt also sowohl die Führung als auch die Rückstellung des aktiven Tilgers.

Vorzugsweise ist jede der beweglichen Verbindungen in eine andere Bewegungsrichtung steif ausgebildet. Über die beweglichen Verbindungen werden die Kräfte zwischen Tilgermasse und dem zu dämpfenden System übertragen. Dabei erfolgt über jede bewegliche Verbindung eine Kraftübertragung in eine andere Richtung.

Bevorzugterweise sind die beweglichen Verbindungen durch Blattfedern gebildet. Blattfedern sind einfach und günstig herzustellen, wobei durch die Wahl des Materials und der Abmessungen eine nahezu beliebige Federrate erzielbar ist. Bezüglich ihrer Längsachse lassen Biegefedern kaum eine Bewegung zu. In diese Richtung ist daher eine direkte, verlustarme Kraftübertragung möglich.

Dabei ist besonders bevorzugt, daß die beweglichen Verbindungen statisch vorgespannt sind. Durch die statische Vorspannung kann eine Absenkung der Tilgermasse, die durch die Schwerkraft hervorgerufen wird, verhindert werden.

Vorzugsweise sind die Aktoren als Tauchspulaktoren mit einer Spule und einem Permanentmagneten ausgebildet. Mit diesen Aktoren lassen sich relativ große Verstellwege erreichen.

Dabei ist besonders bevorzugt, daß die Spule das statische Element und der Permanentmagnet das bewegliche Element ist. Dadurch wird erreicht, daß die bewegte Masse des Aktors, die zur Tilgermasse beiträgt, möglichst groß ist. Die zusätzliche Masse, die durch das Verbindungselement bereitgestellt wird, kann so geringer ausfallen.

In einer bevorzugten Ausführungsform ist das statische Element als Stab und das bewegliche Element als krafterzeugendes Element ausgebildet. Der Stab weist dabei mehrere Permanentmagnete auf, wobei die Nord- und Südpole der Magnete in Richtung der Stabachse liegen. Im krafterzeugenden Element sind Wicklungen angeordnet, die mit einem Steuerstrom angesteuert werden können. Der Aktor ist also als sogenannter Polysolenoidmotor ausgebildet. Ein derartiger Linearmotor kann relativ große Luftspalten aufweisen. Dabei arbeitet er sehr effizient und kann mit einer hohen Ansteuerfrequenz betrieben werden. Dabei sind derartige Aktoren sehr robust und benötigen kaum Wartung.

Vorzugsweise sind parallel zu den Aktoren Linearführungen angeordnet. Dadurch wirken auf die Aktoren nur noch Kräfte in deren Bewegungsrichtung. Anders gerichtete Kräfte werden von den Linearführungen aufgenommen. Bei Tauchspulaktoren wird so beispielsweise ein Verkippen des Permanentmagneten in Bezug zur Spule vermieden, die zu einer Beschädigung des Aktors oder zu einer Veränderung der Motorkennlinie führen kann. Durch die Linearführungen erhöht sich also die Lebensdauer der Aktoren bei gleichzeitig verbessertem Regelverhalten.

Vorzugsweise ist die Länge des Verbindungselements einstellbar. Dadurch läßt sich die Position der Aktoren zueinander einstellen.
Vorzugsweise ist die Masse des Verbindungselements veränderbar. Damit läßt sich die Eigenfrequenz des aktiven Tilgers nicht nur durch die Auswahl der beweglichen Verbindungen bzw. Blattfedern beeinflussen, sondern auch durch die Masse des Verbindungselements. Dies ist besonders hilfreich bei einer Feinjustage bei schon montiertem Tilger.

Vorzugsweise weist die Befestigungsvorrichtung einen runden Querschnitt auf. Der aktive Tilger kann mit einer derartigen Befestigungsvorrichtung leicht an Rohren und ähnlichem befestigt werden. Auf zusätzliche Verschraubungen kann dabei verzichtet werden.

Bevorzugterweise weist die Befestigungsvorrichtung einen vieleckigen, insbesondere rechteckigen Querschnitt auf. Viele Träger weisen ebenfalls einen rechteckigen Querschnitt auf, so daß eine Befestigung des aktiven Tilgers mit Hilfe seiner Befestigungsvorrichtung vorgenommen werden kann, ohne daß zusätzliche Mittel notwendig sind.

Es ist besonders vorteilhaft, wenn der aktive Tilger mindestens einen Schwingungssensor aufweist, der die Schwingungen des zu dämpfenden Bauteils ermittelt. Dabei sollten die Schwingungen in den Bewegungsrichtungen der Aktoren ermittelt werden können. Mit Hilfe der Sensorsignale läßt sich dann ein geeignetes Ansteuersignal für die Aktoren ermitteln, so daß eine optimale Schwingungsminderung erzielt wird.

Vorzugsweise weist der aktive Tilger mindestens einen Sensor auf, der die Schwingungen des Verbindungselements ermittelt. Über die Schwingungen des Verbindungselements lassen sich Rückschlüsse auf die Schwingungen des zu dämpfenden Systems ziehen. Auf das Anbringen eines Sensors auf dem zu dämpfenden System kann so verzichtet werden.

Vorzugsweise weist der aktive Tilger mindestens einen Sensor auf, der die Beziehung zwischen dem zu dämpfenden Bauteil und dem Verbindungselement ermittelt. Ein solcher Sensor kann insbesondere dann vorteilhaft sein, wenn sich das zu dämpfende System zusammen mit dem aktiven Tilger in einem weiteren bewegten System befindet. Eine Schwingungsminderung erfolgt dann nur bei einer Bewegung des zu dämpfenden Systems in Bezug auf den aktiven Tilger. Instabile Zustände werden so vermieden.

Bevorzugterweise weist der aktive Tilger ein Gehäuse auf. Dieses Gehäuse soll insbesondere einen Wetterschutz für den aktiven Tilger gewährleisten, so dass der aktive Tilger auch im Freien eingesetzt werden kann. Die Robustheit des aktiven Tilgers gegenüber äußeren Einflüssen wird so erhöht.

Bevorzugterweise ist der aktive Tilger explosionsgeschützt ausgeführt. Damit ist ein Einsatz des aktiven Tilgers auch in explosionsfähiger Atmosphäre möglich. Die Einsatzbereiche des aktiven Tilgers werden so erweitert.

Die Erfindung wird im Folgenden anhand der beiliegenden Zeichnungen beschrieben. Hierin zeigen:
- Fig. 1: eine Prinzipskizze eines erfindungsgemäßen aktiven Tilgers,
- Fig. 2: den aktiven Tilger nach Fig. 1, ausgelenkt in Y-Richtung,
- Fig. 3: den aktiven Tilger nach Fig. 1, ausgelenkt in Z-Richtung,
- Fig. 4: eine Schnittdarstellung eines erfindungsgemäßen aktiven Tilgers und
- Fig. 5: eine perspektivische Darstellung eines erfindungsgemäßen aktiven Tilgers.

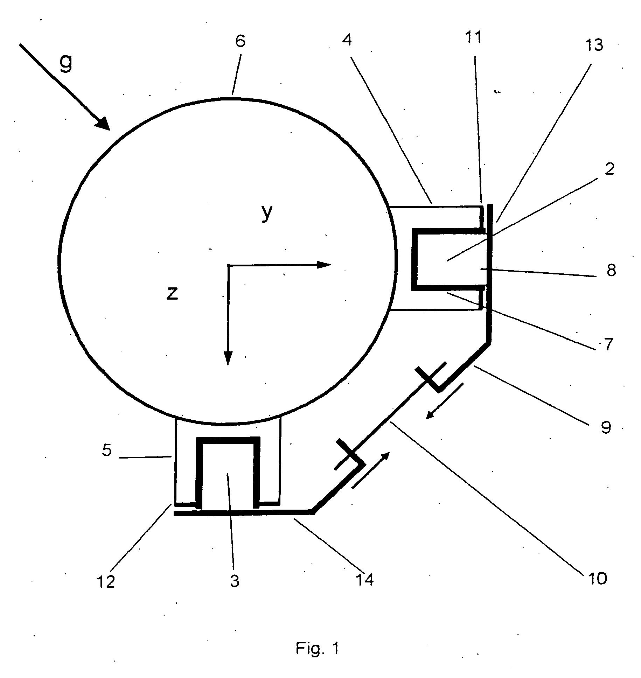

In Fig. 1 ist ein Funktionsprinzip eines aktiven Tilgers 1 dargestellt. Dieser weist zwei Aktoren 2, 3 auf, die in orthogonal zueinander stehenden Bewegungsrichtungen wirken. Diese sind über bewegliche Verbindungen 4, 5, die als Blattfederpaare ausgebildet sind, mit einer kreisförmigen Befestigungsvorrichtung 6 verbunden. Die Blattfedern 4, 5 sind dabei an ersten Befestigungsabschnitten 11, 12 befestigt. Jeder Aktor weist statische Elemente 7 und bewegte Elemente 8 auf. Die bewegten Elemente 8 der Aktoren 2, 3 sind über ein Verbindungselement 9 miteinander verbunden, das an ihrem jeweiligen zweiten Befestigungsabschnitt 13, 14 befestigt ist. Das Verbindungselement 9 weist eine Positionsverstellung 10 auf, mit der die Position der Aktoren 2, 3 zueinander verändert werden kann. Die Aktoren 2, 3 führen eine lineare Bewegung aus. Dafür werden sie entlang einer nicht dargestellten Linearführung geführt. Die beweglichen Verbindungen 4, 5 werden statisch vorgespannt. Dadurch wird ein statisches Absenken der Aktoren und des Verbindungselements ausgeglichen, was z.B. durch die Schwerkraft g hervorgerufen werden kann.

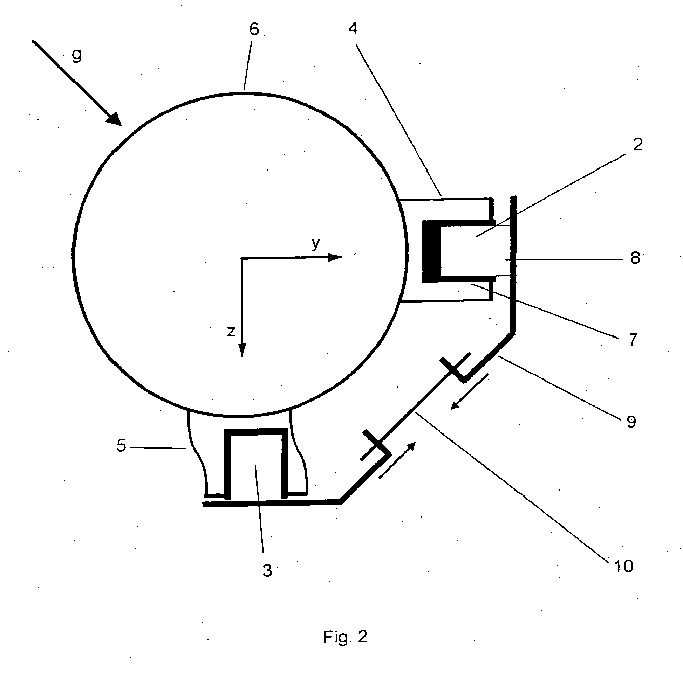

Führt nun der Aktor 2 eine lineare Bewegung aus, erfolgt eine Verstellung des Verbindungselements 9 und des Aktors 3 in Bezug auf die Befestigungsvorrichtung 6, wie es in Fig. 2 dargestellt ist. Dadurch erfolgt eine Auslenkung der Blattfedern 5. Aufgrund der Trägheit der Tilgermasse, die durch den Aktor 3, das Verbindungselement 9 und den beweglichen Teil 8 des Aktors 2 gebildet wird, wird durch die Stellbewegung des Aktors 2 eine Kraft hervorgerufen, die über die Blattfedern 4 und 5 auf die Befestigungsvorrichtung 6 übertragen wird. Die Rückstellbewegung erfolgt aufgrund der Rückstellkräfte der Blattfedern 5, ohne daß der Aktor 2 weitere Energie benötigt.

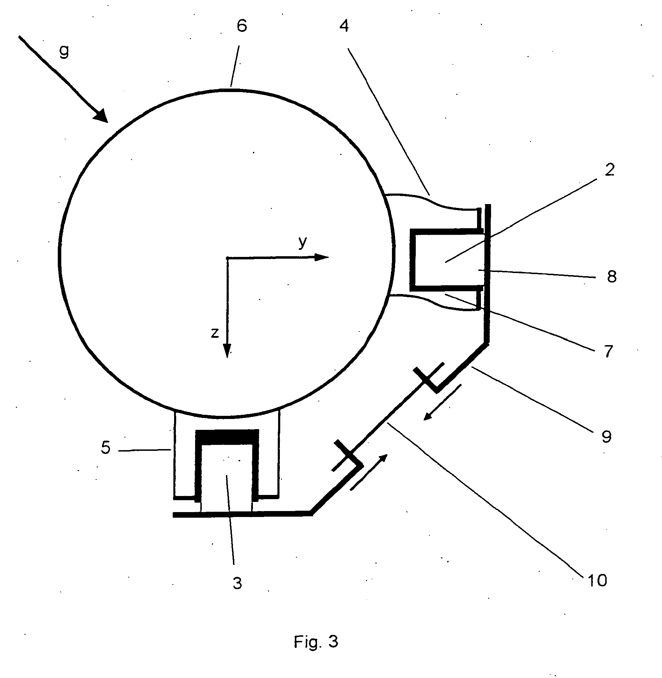

In Fig. 3 ist nun die entsprechende Lage des Aktors 2 und des Verbindungselements 9 dargestellt, wenn der Aktor 3 eine Stellbewegung ausführt und der Aktor 2 nicht angesteuert wird. Dadurch erfolgt eine Auslenkung der Blattfedern 4, wobei die Kraftübertragung der Stellkraft des Aktors über die Blattfedern 4 und 5 erfolgt. Beide Aktoren können auch gleichzeitig aktiviert werden, so daß in der Ebene, die durch die Bewegungsrichtungen der Aktoren aufgespannt wird, eine Schwingungsminderung in beliebiger Richtung erfolgen kann.

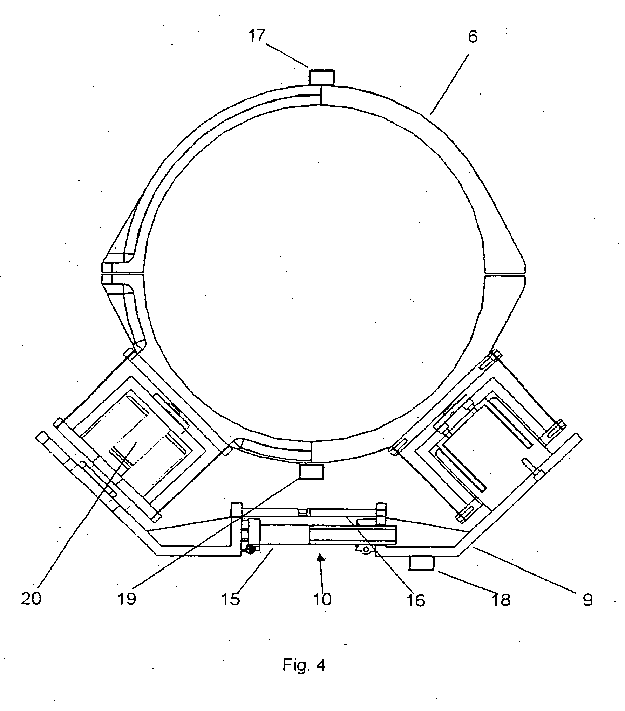

Fig. 4 ist eine Schnittdarstellung eines erfindungsgemäßen aktiven Tilgers. Dabei sind gleiche Elemente mit den gleichen Bezugszeichen versehen, wie in den Prinzipdarstellungen. Die Linearführung 20 ist dabei außerhalb des eigentlichen Aktors 2, 3 angeordnet. Die Befestigungsvorrichtung 6 wird im Prinzip aus zwei halbkreisförmigen Rohrstücken gebildet, die miteinander verschraubt werden. Damit kann der aktive Tilger in einfacher Weise auf rohrförmigen Elementen angebracht werden, die einen entsprechenden Außendurchmesser aufweisen. Die Positionsverstellung 10 wird mit einer Spindel 15 realisiert, wobei eine zweite Spindel 16 vorgesehen ist, wodurch eine Sicherung der Spindelposition der Spindel 15 durch gegenseitiges Verspannen der Spindeln 15, 16 erfolgt.

Des Weiteren sind in Fig. 4 beispielhaft mögliche Sensorpositionen dargestellt. Ein Schwingungssensor 17 ist an der Befestigungsvorrichtung 6 angeordnet, wobei er auch in diese integriert werden kann. Die Befestigungsvorrichtung 6 wird direkt mit dem Bauteil verbunden, dessen Schwingungen gemindert werden sollen. Ein Schwingungssensor 18 ist auf dem Verbindungselement 9 angeordnet. Dieser erzeugt Ausgangssignale, die zur Verbesserung des Regelverhaltens des aktiven Tilgers genutzt werden.

Ein Sensor 19 ist zwischen der Befestigungsvorrichtung 6 und dem Verbindungselement 9 angeordnet. Er kann dabei beispielsweise als Entfernungsmesser ausgebildet sein, der ein Ausgangssignal erzeugt, das von der Position des Verbindungselements 9 zur Befestigungsvorrichtung 6 abhängig ist.

Mit Hilfe der Sensoren 17, 18, 19 werden Signale erzeugt, die proportional zu den Schwingungen des Bauteils sind, dessen Schwingung gemindert werden soll. Auf Grundlage dieser Signale erzeugt eine Steuereinrichtung Ansteuersignale für die Aktoren 2 und 3, so daß die Tilgermasse derart phasenversetzt bewegt wird, daß eine Schwingungsminderung erfolgt. Dabei ist mindestens einer der Sensoren 17, 18, 19 notwendig.

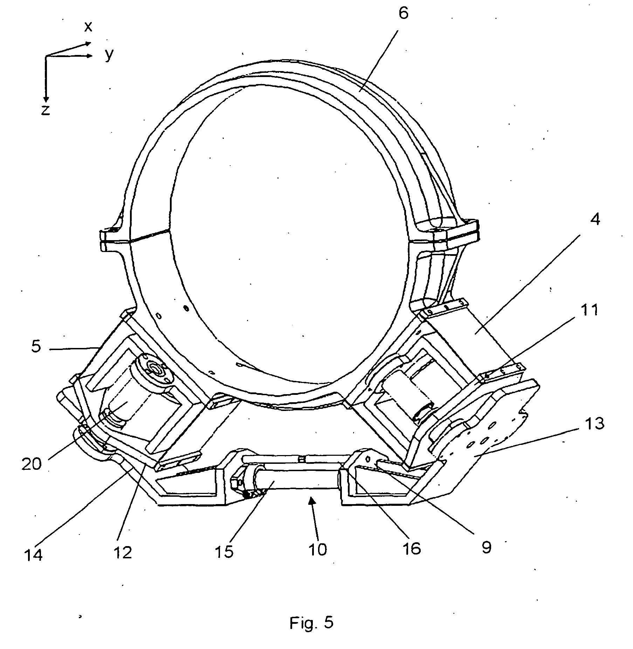

In Fig. 5 ist der aktive Tilger aus Fig. 4 in perspektivischer Darstellung dargestellt. Als Aktoren 2, 3 sind dabei Tauchspulaktoren mit Linearführungen 20 verwendet. Denkbar ist aber auch die Verwendung anderer Linearmotoren, z.B. Linear-Direktantriebe. Die Tauchspulaktoren weisen einen Permanentmagneten und eine Spule auf, wobei der Permanentmagnet in Bezug zu den als Blattfedern ausgebildeten beweglichen Verbindungen 4, 5 bewegt wird, wenn der entsprechende Aktor 2, 3 angesteuert wird. Die Blattfedern 4, 5 sind relativ breit ausgebildet, so daß eine Schwingung des aktiven Tilgers in X-Richtung verhindert wird. Durch die Ausgestaltung des Verbindungselements 9 oder durch das Anbringen von Zusatzmassen läßt sich die Tilgermasse dem zugrunde liegenden Problem anpassen. Dadurch kann auf einfache Weise beispielsweise auf Änderungen der Schwingungsfrequenz des zu dämpfenden Systems aufgrund von baulichen Veränderungen reagiert werden. Der größte Teil des aktiven Tilgers kann dabei unverändert bleiben.

## Patentansprüche

1. Aktiver Tilger (1), der mindestens zwei in unterschiedliche Bewegungsrichtungen wirkende Aktoren (2, 3) und eine Befestigungsvorrichtung (6) aufweist, wobei die Aktoren (2, 3) einen ersten (11, 12) und einen zweiten Befestigungsabschnitt (13, 14) aufweisen, wobei die Aktoren (2, 3) am ersten Befestigungsabschnitt (11, 12) über bewegliche Verbindungen (4, 5) mit der Befestigungsvorrichtung (6) verbunden sind und am zweiten Befestigungsabschnitt (13, 14) über ein steifes Verbindungselement (9) miteinander gekoppelt sind, **dadurch gekennzeichnet, daß** die beweglichen Verbindungen (4, 5) jeweils in der Bewegungsrichtung des Aktors (2, 3) steif ausgebildet sind, mit dem sie verbunden sind, und in die anderen Bewegungsrichtungen Rückstellkräfte erzeugen.

2. Aktiver Tilger nach Anspruch 1, **dadurch gekennzeichnet, daß** jeder Aktor (2, 3) statische (7) und bewegte (8) Elemente aufweist, wobei der erste Befestigungsabschnitt (11, 12) an den statischen Elementen (7) und der zweite Befestigungsabschnitt (13, 14) an den bewegten Elementen (8) angeordnet ist.

3. Aktiver Tilger nach Anspruch 1 oder 2, **dadurch gekennzeichnet, daß** die beweglichen Verbindungen (4, 5) als stoffschlüssige Gelenke ausgebildet sind, die in mindestens eine Bewegungsrichtung steif ausgebildet sind und in die anderen Bewegungsrichtungen Rückstellkräfte erzeugen.

4. Aktiver Tilger nach einem der Ansprüche 1 bis 3, **dadurch gekennzeichnet, daß** jede der beweglichen Verbindungen (4, 5) in eine andere Bewegungsrichtung steif ausgebildet ist.

5. Aktiver Tilger nach Anspruch 3, **dadurch gekennzeichnet, daß** die beweglichen Verbindungen (4, 5) durch Blattfedern gebildet sind.

6. Aktiver Tilger nach Anspruch 5, **dadurch gekennzeichnet, daß** die beweglichen Verbindungen (4, 5) statisch vorgespannt sind.

7. Aktiver Tilger nach einem der Ansprüche 1 bis 6, **dadurch gekennzeichnet, daß** die Aktoren (2, 3) als Tauchspulaktoren mit einer Spule und einem Permanentmagneten ausgebildet sind.

8. Aktiver Tilger nach Anspruch 7, **dadurch gekennzeichnet, daß** die Spule das statische Element (7) und der Permanentmagnet das bewegliche Element (8) ist.

9. Aktiver Tigler nach einem der Ansprüche 2 bis 8, **dadurch gekennzeichnet, daß** das statische Element (7) als Stab und das bewegliche Element (8) als krafterzeugendes Element ausgebildet ist.

10. Aktiver Tilger nach einem der Ansprüche 1 bis 9, **dadurch gekennzeichnet, daß** parallel zu den Aktoren (2, 3) Linearführungen (20) angeordnet sind.

11. Aktiver Tilger nach einem der Ansprüche 1 bis 10, **dadurch gekennzeichnet, daß** die Länge des Verbindungselements (9) einstellbar ist.

12. Aktiver Tilger nach einem der Ansprüche 1 bis 11, **dadurch gekennzeichnet, daß** die Masse des Verbindungselements (9) veränderbar ist.

13. Aktiver Tilger nach einem der Ansprüche 1 bis 12, **dadurch gekennzeichnet, daß** die Befestigungsvorrichtung (6) einen runden Querschnitt aufweist.

14. Aktiver Tilger nach einem der Ansprüche 1 bis 13, **dadurch gekennzeichnet, daß** die Befestigungsvorrichtung (6) einen vieleckigen, insbesondere rechteckigen Querschnitt aufweist.

15. Aktiver Tilger nach einem der Ansprüche 1 bis 14, **dadurch gekennzeichnet, daß** er mindestens einen Schwingüngssensor (17) aufweist, der die Schwingungen des zu dämpfenden Bauteils ermittelt.

16. Aktiver Tilger nach einem der Ansprüche 1 bis 15, **dadurch gekennzeichnet, daß** er mindestens einen Sensor (18) aufweist, der die Schwingungen des Verbindungselements ermittelt.

17. Aktiver Tilger nach einem der Ansprüche 1 bis 16, **dadurch gekennzeichnet, daß** er mindestens einen Sensor (19) aufweist, der die Beziehung zwischen dem zu dämpfenden Bauteil und dem Verbindungselement ermittelt.

18. Aktiver Tilger nach einem der Ansprüche 1 bis 17, **dadurch gekennzeichnet, daß** der aktive Tilger ein Gehäuse aufweist.

19. Aktiver Tilger nach einem der Ansprüche 1 bis 18, **dadurch gekennzeichnet, daß** der aktive Tilger explosionsgeschützt ausgebildet ist.

## Claims

1. Active absorber (1) which comprises at least two actuators (2, 3) acting in different movement directions and a fixing device (6), the actuators (2, 3) comprising a first (11, 12) and a second (13, 14) fixing portion, the actuators (2, 3) being connected to the fixing device (6) at the first fixing portion (11, 12) via movable connections (4, 5) and being coupled to one another at the second connecting portion (13, 14) via a rigid connecting member (9), **characterised in that** the movable connections (4, 5) are each formed rigidly in the movement direction of the actuator (2, 3) to which they are connected and generate restoring forces in the other movement directions.

2. Active absorber according to claim 1, **characterised in that** each actuator (2, 3) comprises static (7) and moved (8) members, the first fixing portion (11, 12) being arranged on the static members (7) and the second fixing portion (13, 14) being arranged on the moved members (8).

3. Active absorber according to either claim 1 or claim 2, **characterised in that** the movable connections (4, 5) are formed as adhesively bonded joints which are formed rigidly in at least one movement direction and generate restoring forces in the other movement directions.

4. Active absorber according to any one of claims 1 to 3, **characterised in that** each of the movable connections (4, 5) is formed rigidly in a different movement direction.

5. Active absorber according to claim 3, **characterised in that** the movable connections (4, 5) are formed by leaf springs.

6. Active absorber according to claim 5, **characterised in that** the movable connections (4, 5) are statically biased.

7. Active absorber according to any one of claims 1 to 6, **characterised in that** the actuators (2, 3) are formed as moving coil actuators having a coil and a permanent magnet.

8. Active absorber according to claim 7, **characterised in that** the coil is the static member (7) and the permanent magnet is the movable member (8).

9. Active absorber according to any one of claims 2 to 8, **characterised in that** the static member (7) is formed as a rod and the movable member (8) is formed as a force-generating member.

10. Active absorber according to any one of claims 1 to 9, **characterised in that** linear guides (20) are arranged parallel to the actuators (2, 3).

11. Active absorber according to any one of claims 1 to 10, **characterised in that** the length of the connecting member (9) is adjustable.

12. Active absorber according to any one of claims 1 to 11, **characterised in that** the mass of the connecting member (9) is changeable.

13. Active absorber according to any one of claims 1 to 12, **characterised in that** the fixing device (6) comprises a round cross-section.

14. Active absorber according to any one of claims 1 to 13, **characterised in that** the fixing device (6) comprises a polygonal, in particular rectangular cross-section.

15. Active absorber according to any one of claims 1 to 14, **characterised in that** it comprises at least one vibration sensor (17) which detects the vibrations of the component to be damped.

16. Active absorber according to any one of claims 1 to 15, **characterised in that** it comprises at least one sensor (18) which detects the vibrations of the connecting member.

17. Active absorber according to any one of claims 1 to 16, **characterised in that** it comprises at least one sensor (19) which determines the relationship between the component to be damped and the connecting member.

18. Active absorber according to any one of claims 1 to 17, **characterised in that** the active absorber comprises a housing.

19. Active absorber according to any one of claims 1 to 18, **characterised in that** the active absorber is formed so as to be explosion-proof.

## Revendications

1. Amortisseur actif (1), qui comprend au moins deux actionneurs (2, 3) agissant dans des directions de mouvements différentes et un dispositif de fixation (6), lequel les actionneurs (2, 3) comprennant un premier tronçon de fixation (11,12) et un second tronçon de fixation (13, 14), les actionneurs (2, 3) étant reliés au dispositif de fixation (6) au niveau du premier tronçon de fixation (11, 12) via des liaisons mobiles (4, 5) et étant couplés l'un avec l'autre au niveau du second tronçon de fixation (13, 14) via un élément de liaison rigide (9), **caractérisé en ce que** les liaisons mobiles (4, 5) sont réalisées chacune rigide dans la direction de mouvement de l'actionneur (2, 3) avec lequel elles sont reliées, et engendrent des forces de rappel dans les autres directions de mouvement.

2. Amortisseur actif selon la revendication 1, **caractérisé en ce que** chaque actionneur (2, 3) comprend des éléments statiques (7) et des éléments mobiles (8), ledit premier tronçon de fixation (11, 12) étant agencé sur les éléments statiques (7) et le second tronçon de fixation (13, 14) étant agencé sur les éléments mobiles (8).

3. Amortisseur actif selon la revendication 1 ou 2, **caractérisé en ce que** les liaisons mobiles (4, 5) sont réalisées sous forme d'articulations à coopération de matière, qui sont réalisées rigides dans au moins une direction de mouvement et engendrent des forces de rappel dans les autres directions de mouvement.

4. Amortisseur actif selon l'une des revendications 1 à 3, **caractérisé en ce que** chacune des liaisons mobiles (4, 5) est réalisée rigide dans une autre direction de mouvement.

5. Amortisseur actif selon la revendication 3, **caractérisé en ce que** les liaisons mobiles (4, 5) sont formées par des ressorts à lame.

6. Amortisseur actif selon la revendication 5, **caractérisé en ce que** les liaisons mobiles (4, 5) sont précontraintes de manière statique.

7. Amortisseur actif selon l'une des revendications 1 à 6, **caractérisé en ce que** les actionneurs (2, 3) sont réalisés sous forme d'actionneurs à bobine plongeante comprenant une bobine et un aimant permanent.

8. Amortisseur actif selon la revendication 7, **caractérisé en ce que** la bobine est l'élément statique (7) et l'aimant permanent est l'élément mobile (8).

9. Amortisseur actif selon l'une des revendications 2 à 8, **caractérisé en ce que** l'élément statique (7) est réalisé sous forme de barreau, et l'élément mobile (8) est réalisé sous forme d'élément produisant une force.

10. Amortisseur actif selon l'une des revendications 1 à 9, **caractérisé en ce que** des guidages linéaires (20) sont agencés parallèlement aux actionneurs (2, 3).

11. Amortisseur actif selon l'une des revendications 1 à 10, **caractérisé en ce que** la longueur de l'élément de liaison (9) est réglable.

12. Amortisseur actif selon l'une des revendications 1 à 11, **caractérisé en ce que** la masse de l'élément de liaison (7) est modifiable.

13. Amortisseur actif selon l'une des revendications 1 à 12, **caractérisé en ce que** le dispositif de fixation (6) présente une section transversale arrondie.

14. Amortisseur actif selon l'une des revendications 1 à 13, **caractérisé en ce que** le dispositif de fixation présente une section transversale polygonale, en particulier rectangulaire.

15. Amortisseur actif selon l'une des revendications 1 à 14, **caractérisé en ce qu'**il comprend au moins un capteur d'oscillations (17) qui détecte les oscillations du composant à amortir.

16. Amortisseur actif selon l'une des revendications 1 à 15, **caractérisé en ce qu'**il comprend au moins un capteur (18) qui détecte les oscillations de l'élément de liaison.

17. Amortisseur actif selon l'une des revendications 1 à 16, **caractérisé en ce qu'**il comprend au moins un capteur (19) qui détecte la relation entre le composant à amortir et l'élément de liaison.

18. Amortisseur actif selon l'une des revendications 1 à 17, **caractérisé en ce que** l'amortisseur actif comprend un boîtier.

19. Amortisseur actif selon l'une des revendications 1 à 18, **caractérisé en ce que** l'amortisseur actif est réalisé de manière protégée vis-à-vis des explosions.
